(19) **Europäisches Patentamt / European Patent Office / Office européen des brevets**

(11) **EP 4 235 570 B1**

(12) **FASCICULE DE BREVET EUROPEEN**

(45) Date de publication et mention de la délivrance du brevet:
**01.04.2026 Bulletin 2026/14**

(21) Numéro de dépôt: **22305220.0**

(22) Date de dépôt: **28.02.2022**

(51) Classification Internationale des Brevets (IPC):
***G06T 7/292*** *(2017.01)*

(52) Classification Coopérative des Brevets (CPC):
**G06T 7/292;** G06T 2207/10016; G06T 2207/30196;
G06T 2207/30232; G06T 2207/30236;
G06T 2207/30241

(54) **PROCÉDÉ, DISPOSITIF ET SYSTÈME DE SUIVI EN TEMPS RÉEL ET MULTI-CAMÉRAS D'UN OBJET CIBLE**

VERFAHREN, VORRICHTUNG UND SYSTEM ZUR ECHTZEIT- UND MULTI-KAMERA-VERFOLGUNG EINES ZIELOBJEKTS

METHOD, DEVICE AND SYSTEM FOR REAL TIME AND MULTI-CAMERA MONITORING OF A TARGET OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**30.08.2023 Bulletin 2023/35**

(73) Titulaire: **BULL SAS**
**78340 Les Clayes-Sous-Bois (FR)**

(72) Inventeurs:
- **METGE, Baptiste**
  **38000 GRENOBLE (FR)**
- **PELLETIER, Benoît**
  **38960 SAINT-ETIENNE DE CROSSEY (FR)**
- **BOUKAMEL-DONNOU, Cécile**
  **38130 ECHIROLLES (FR)**
- **TATO, Genc**
  **75019 PARIS (FR)**
- **ALSAYASNEH, Maha**
  **38000 GRENOBLE (FR)**
- **ARNAISE, Nicolas**
  **38300 BOURGOIN JALLIEU (FR)**
- **GIRAUD, Vincent**
  **38240 MEYLAN (FR)**

(74) Mandataire: **IPAZ**
**Parc Les Algorithmes, Bâtiment Platon**
**CS 70003 Saint Aubin**
**91192 Gif sur Yvette Cedex (FR)**

(56) Documents cités:
**US-A1- 2021 182 532    US-A1- 2022 004 768**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de suivi en temps réel et multi-caméras d'un objet cible. Elle concerne également un programme d'ordinateur, un dispositif et un système mettant en œuvre un tel procédé.
Le domaine de l'invention est de manière générale le domaine du suivi d'objets à partir d'images captées par des caméras.

**État de la technique**

Les villes s'équipent de plus en plus en caméras de vidéosurveillance dont le nombre augmente plus vite que le nombre d'opérateurs humains. Il est très difficile de suivre un objet cible, tel qu'une personne ou un véhicule, se déplaçant de caméra en caméra. Si l'opérateur est dérangé, il peut perdre l'objet cible, et le retrouver peut-être particulièrement fastidieux. Le suivi de plusieurs objets cibles à la fois est encore plus difficile. Le suivi d'un objet cible sur des images fournies par plusieurs caméras est également appelé tracking multi-caméras.
On connait des solutions de suivi (« tracking » en anglais) multi-caméras basées sur des modèles de deep learning et notamment des modèles de ré-identification. Ces solutions souffrent d'une chute importante de performances sur les données réelles, c'est-à-dire sur des images en condition d'utilisation. Ce phénomène est référencé dans l'état de l'art sous le terme « domain drift ». Cette chute de performance a pour effet d'induire un important taux de faux positifs et de faux négatifs dans les reconnaissances des objets, il faut alors un très grand nombre d'interactions avec l'opérateur pour valider ou invalider les propositions de reconnaissances faites par la solution de tracking, ce qui nécessite encore plus d'opérateurs humains.
Le brevet US 2022/004768 A1 (PELLETIER BENOÎT [FR] ET AL) daté du 6 janvier 2022, divulgue une méthode pour assister la surveillance en temps-réel de personnes dans une séquence d'images, à l'aide d'une analyse de tracklet préalablement calculées sur des cibles identifiées dans les images.
Le brevet US 2021/182532 A1 (ARNAISE NICOLAS [FR] ET AL) daté du 17 juin 2021, divulgue une méthode de tracking pour suivre un élément de référence dans des images successives d'un environnement, l'élément de référence étant associé à une liste de référence de signatures visuelles, une signature visuelle étant un vecteur décrivant l'apparence visuelle de l'élément de référence.
Un but de la présente invention est de remédier à au moins un des inconvénients de l'état de la technique.
Un autre but de l'invention est de proposer une solution de suivi multi-caméras plus performante.
Un autre but de l'invention est de proposer une solution de suivi multi-caméras réduisant l'interaction avec les opérateurs humains.

**Exposé de l'invention**

L'invention propose d'atteindre au moins l'un des buts précités par un procédé mis en oeuvre par ordinateur de suivi en temps réel et multi-caméras d'un objet cible selon la revendication 1.
Ainsi, l'invention propose de déterminer, et en particulier d'ajuster, la valeur du seuil humain en fonction du nombre de tracklets de référence utilisées pour le suivi de l'objet cible. Par exemple, il est possible de diminuer la valeur du seuil humain lorsque le nombre de tracklets de référence dans la liste de référence augmente. Alternativement, ou en plus, il est possible d'augmenter la valeur du seuil humain lorsque le nombre de tracklets de référence est petit. De manière générale, la valeur du seuil humain est ajustée de manière inversement proportionnelle au nombre de tracklets de référence dans la liste de référence.
L'utilisation d'un plus grand nombre de tracklets de référence permet de diminuer le seuil humain à partir duquel une validation est demandée à l'opérateur. La diminution du seuil humain permet de diminuer le nombre de sollicitations de l'opérateur humain lors du suivi de l'objet cible, réduisant ainsi l'interaction avec l'opérateurs humain.
De plus, l'utilisation d'un plus grand nombre de tracklets de référence permet d'augmenter la performance de suivi, en réduisant le nombre de faux positifs et le nombre de faux négatifs.
Dans la présente demande par « objet » ou « objet cible » on entend tout type d'objet, tel qu'un humain, un animal, une voiture, etc.
Dans la présente demande par « tracklet », on entend un ensemble d'au moins une image, ou zone d'image, appartenant à un même objet et captée par une caméra.
Dans la présente demande par « tracklet passée », on entend une tracklet mémorisée par une caméra préalablement à la phase de suivi.
Dans la présente demande par « nouvelle tracklet », on entend une tracklet mémorisée par une caméra lors de la phase de suivi, c'est-à-dire après le déclenchement de la phase de suivi.
La distance entre deux tracklets peut être une distance euclidienne ou une distance cosinus.
La distance entre deux tracklets peut être calculée selon toute technique connue. Suivant un premier exemple, et de manière nullement limitative, la distance entre deux tracklets peut être déterminée en fonction des distances individuelles entre chacune des images formant l'une des tracklets et chacune des images formant l'autre des tracklets, puis en calculant une distance agrégée en fonction desdites distances individuelles, par exemple en faisant la moyenne des distances individuelles. Alternativement, pour une tracklet, il est possible de calculer une signature agrégée pour une tracklet, par exemple comme étant une moyenne des signatures de chaque image composant ladite tracklet. La distance entre deux tracklets peut alors correspondre à la distance entre les signatures agrégées des deux tracklets.

De manière connue, la distance entre deux images peut être calculée en générant une signature numérique pour chacune des images, par exemple par un modèle intelligent tel qu'un réseau neuronal, puis en calculant la distance entre ces deux signatures numériques.

Par « caméra », on entend tout type d'appareil d'acquisition d'une image, telle que tout type de caméra de type RGB, LIDAR, thermique, 3D, etc.

Au moins une tracklet de référence se trouvant dans la liste de référence au démarrage du procédé peut être sélectionnée par l'opérateur.

Alternativement, ou en plus, au moins une tracklet de référence se trouvant dans la liste de référence au démarrage du procédé peut être sélectionnée/détectée de manière automatique, sans intervention de l'opérateur. Par exemple, au moins une tracklet de référence se trouvant dans la liste de référence au démarrage du procédé peut être détectée suite à une alarme. Dans ce cas, l'objet cible et donc la tracklet de référence, peut être identifiée de manière automatisée, par exemple dans les données associées à l'alarme, ce qui permet d'activer automatiquement un suivi, sans intervention d'un opérateur.

Suivant des modes de réalisation, lorsque la plus petite première distance calculée est inférieure au seuil de ré-identification, la phase de suivi peut comprendre une attribution automatique de la nouvelle tracklet à l'objet cible.

En effet, dans ce cas, l'objet se trouvant sur la nouvelle tracklet est jugé suffisamment ressemblant à l'objet cible de sorte qu'il est considéré que l'objet se trouvant sur ladite nouvelle tracklet est l'objet cible, sans avoir à solliciter l'opérateur.

Suivant une caractéristique particulièrement avantageuse, lorsqu'une nouvelle tracklet est attribuée à l'objet cible lors de la phase de suivi, ladite phase de suivi peut en outre comprendre une étape d'ajout de ladite nouvelle tracklet comme tracklet de référence dans ladite liste de référence.

Ainsi, l'invention permet d'augmenter le nombre de tracklet de référence dans la liste de référence, ce qui diminue la valeur du seuil humain et permet de réduire l'interaction avec, et la sollicitation de, l'opérateur.

L'attribution de la nouvelle tracklet à l'objet cible peut être réalisée de manière automatisée ou de manière manuelle, telle que décrit plus haut.

Suivant une caractéristique optionnelle mais particulièrement avantageuse de la présente invention, le procédé selon l'invention peut comprendre, avant la phase de suivi, une phase préalable d'enrichissement de la liste de référence, par ajout d'au moins une tracklet de référence additionnelle dans ladite liste de référence, choisie dans une base de tracklets passées acquises lors d'une période prédéterminée précédant le déclenchement de la phase de suivi.

Par exemple, l'opérateur peut choisir une tracklet de référence correspondant à l'objet cible concerné par le suivi. Cette tracklet de référence choisie par l'opérateur peut être utilisée pour identifier d'autres tracklets de référence correspondant à l'objet et acquise pendant une période passée, précédant immédiatement le déclenchement du suivi de l'objet cible.

Ainsi, il est possible d'augmenter le nombre de tracklets de référence avant de commencer le suivi de l'objet cible. Comme indiqué plus haut, l'augmentation du nombre de tracklets de référence permet d'une part d'augmenter la performance du suivi, et d'autre part de diminuer la valeur du seuil humain et par conséquent l'interaction avec l'opérateur lors du suivi.

La période prédéterminée peut correspondre à une période de 30 minutes, ou une heure, précédant immédiatement la phase de suivi. Cette période peut être ajustable ou ajustée par l'opérateur.

Suivant des modes de réalisation, la phase préalable d'enrichissement de la liste de référence peut comprendre, au moins une itération des étapes suivantes réalisées pour une tracklet passée :

- calcul d'au moins une distance entre :

    ▪ une tracklet de référence de ladite liste de référence, et
    ▪ ladite tracklet passée,

- ajout, ou non, de ladite tracklet passée comme tracklet de référence additionnelle dans ladite liste de référence en fonction :

    ▪ de ladite au moins une distance calculée, et
    ▪ du seuil de ré-identification et/ou du seuil humain.

Ainsi, l'invention propose d'identifier de nouvelles tracklets de référence parmi des tracklets passées en fonction de la distance entre la ou les tracklets de référence et chaque tracklet passée.

Suivant des modes de réalisation, pour au moins tracklet passée, lorsqu'au moins une distance calculée est inférieure au seuil de ré-identification alors la tracklet passée est ajoutée comme tracklet de référence dans la liste de référence.

Alternativement ou en plus, pour au moins tracklet passée, lorsque la plus petite des distances calculées est comprise entre le seuil de ré-identification et le seuil humain alors la tracklet passée est présentée à l'opérateur. Si l'opérateur valide la tracklet passée comme appartenant à l'objet cible alors ladite tracklet passée est ajoutée comme tracklet de référence dans la liste de référence. Dans le cas contraire, la tracklet passée est ignorée.

Suivant une caractéristique avantageuse, le procédé selon l'invention peut comprendre une mise à jour de la valeur du seuil humain en cas d'ajout d'une tracklet de référence dans ladite liste de référence.

Par exemple, cette étape de mise à jour peut être réalisée à chaque fois qu'une tracklet de référence est ajoutée dans la liste de référence, de manière automatique et/ou manuellement après validation par l'opérateur, pendant la phase de suivi et/ou pendant la phase préalable.

La valeur du seuil humain peut être calculée par la relation suivante :

$$SH = SH_i - \{NBTR \ x \ PA\}$$

avec:

- SH la valeur du seuil humain,
- $SH_i$ la valeur initiale du seuil humain, choisie lors du démarrage du procédé selon l'invention
- NBTR le nombre de tracklets de référence dans la liste de référence,
- PA un pas d'apprentissage prédéfini.

Le pas d'apprentissage PA peut être défini en fonction d'un nombre maximum, $NB_{MAX}$, de tracklets de référence dans la liste de référence.

Alternativement, ou en plus, le pas d'apprentissage PA peut être défini en fonction d'une valeur d'apprentissage totale, notée D. Par exemple :

$$D \leq (SH_i\text{-}SR),$$

avec SR le seuil de ré-identification.

Suivant un exemple de réalisation non limitatif, le pas d'apprentissage PA peut être calculé selon la relation suivante :

$$PA = D/NB_{MAX}$$

Suivant un exemple de réalisation non limitatif :

$$D = SH_i\text{-}SR.$$

Dans ce cas, la valeur du seuil humain peut être calculée avec la relation suivante :

$$SH_n = SH_i - \{NBTR \ x \ \left(\frac{SH_i - SR}{NB_{max}}\right)\}$$

Dans ce cas, lorsque le nombre de tracklets de référence NBTR dans la liste de référence augmente, la valeur du seuil humain SH se rapproche progressivement de la valeur du seuil de ré-identification SR, réduisant ainsi la sollicitation de l'opérateur lors de la phase de suivi.

Surtout, lorsque le nombre NBTR de tracklets de référence dans la liste de référence est égale au nombre maximum de tracklets de référence $NB_{max}$ alors on a SH=SR de sorte que la ré-identification se fera de manière entièrement automatisée sans sollicitation de l'opérateur.

Suivant des modes de réalisation avantageux, le procédé selon l'invention peut en outre comprendre un ajustement du seuil humain, et/ou du seuil de ré-identification, en fonction d'au moins une caractéristique d'une scène observée par une caméra.

Une telle caractéristique peut par exemple être la luminosité de la scène. Par exemple, il est possible de déterminer la luminosité d'une scène en fonction de la luminosité d'une tracklet ou encore de la luminosité des images prises par la caméra observant ladite scène. En particulier, le seuil humain peut être ajustée à la baisse lorsque la luminosité de la scène augmente, à la hausse lorsque la luminosité de la scène diminue.

Une telle caractéristique peut par exemple être le nombre d'objets dans la scène, et plus généralement la complexité de la scène. Par exemple, il est possible de déterminer le nombre d'objets dans une scène en comptant le nombre d'objets sur une image prise par la caméra observant ladite scène. La détection du nombre d'objets dans une image peut être réalisée par toute technique connue, par exemple en utilisant l'algorithme YOLOV5. En particulier, le seuil humain peut être ajusté à la baisse lorsque la nombre d'objets dans la scène diminue et à la hausse lorsque nombre d'objets dans la scène augmente.

Suivant une caractéristique avantageuse, l'étape de présentation d'une tracklet à l'opérateur peut être réalisée suivant au moins une règle prédéterminée en fonction d'au moins une des paramètres suivants :

- nombre de tracklets, noté NTP, à présenter à l'opérateur en une fois,
- durée écoulée, DUR, depuis la dernière itération de l'étape de présentation, et/ou
- nombre, NMT, de meilleures correspondances.

En particulier, le nombre de tracklets à présenter peut correspondre au nombre total de tracklets à présenter à l'opérateur. Dans ce cas, chaque tracklet satisfaisant le seuil humain (mais pas le seuil de ré-identification) est mémorisée dans une liste de tracklets à présenter à l'opérateur. Dès que le nombre de tracklets dans cette liste atteint le nombre NTP alors l'étape de présentation peut être réalisée. Suivant un exemple de réalisation, NTP=10.

Alternativement, le nombre NTP peut correspondre au nombre maximum de tracklets à présenter à l'opérateur. Dans ce cas, même si le nombre NTP n'est pas atteint, par exemple du fait d'un nombre faible de nouveaux tracklets, alors les tracklets peuvent être présentées à l'opérateur lorsque la durée DUR est atteint.

En particulier, la durée écoulée DUR depuis la dernière itération peut correspondre au temps minimal à respecter entre deux itérations de l'étape de présentation. Suivant un exemple de réalisation DUR= 10minutes.

Le nombre de meilleurs correspondance NMT peut être le nombre des tracklets présentant la première distance la plus faible par rapport aux tracklets de référence. Dans ce cas, seul ces tracklets sont présentées à l'opérateur lors de l'étape de présentation. Suivant un exemple de réalisation non limitatif NMT=3.

Par exemple, lorsque NTP=10 et NMT=3, alors la phase de suivi est réalisée sans l'étape de présentation jusqu'à ce qu'il y ait au moins 10 tracklets dans la liste de tracklets à présenter à l'opérateur. Dès que la liste comprend 10 tracklets, l'étape de présentation est réalisée. Lors de cette étape de présentation, seules sont présentées à l'opérateur les trois tracklets qui ont les meilleurs scores, c'est-à-dire les plus faibles premières distances par rapport aux tracklets de référence. Les autres tracklets sont ignorées.

Suivant des modes de réalisation, la validation, ou non, de l'opérateur pour une première tracklet peut être utilisée pour valider ou non une deuxième tracklet suivant ladite première tracklet, de sorte que ladite deuxième tracklet n'est pas présentée à l'opérateur.

Par exemple, les première et deuxième tracklets peuvent être obtenues par la même caméra dans un lapse de temps très court.

Les première et deuxième tracklets peuvent être obtenues par division d'une tracklet source en plusieurs fragments pour cause d'occlusion, par exemple. Dans ce cas, les deux fragments peuvent être très similaires et la réponse de l'utilisateur a l'un des fragments peut, probablement, être utilisée pour l'autre.

Lorsque l'utilisateur n'a pas encore été interrogé sur la première tracklet, ou n'a pas encore pris position sur la première tracklet, la deuxième tracklet peut être mise dans une liste en attendant la validation ou non de la première tracklet. Puis, lorsque l'opérateur a pris une décision concernant la première tracklet, validation ou rejet de la première tracklet, la même décision est appliquée à la deuxième tracklet, validation ou rejet de la deuxième tracklet.

La phase de suivi peut en outre comprendre une étape de mémorisation de la nouvelle tracklet dans une liste, dite liste de tracklets rejetées, lorsque ladite nouvelle tracklet n'est pas attribuée à l'objet cible.

La nouvelle tracklet peut être rejetée lorsque la plus petite première distance est supérieure au seuil humain.

La nouvelle tracklet peut être rejetée lorsque la plus petite première distance est comprise entre le seuil humain et le seuil de ré-identification mais qu'elle est rejetée suite à une décision de l'opérateur lors de l'étape de d'interrogation.

La liste des tracklets rejetées peut comprendre toutes les tracklets rejetées. Alternativement, la liste des tracklets rejetées peut comprendre uniquement un nombre prédéterminé des tracklets les plus récemment rejetées. Suivant encore une alternative, la liste des tracklets rejetées peut comprendre uniquement les tracklets rejetées lors d'une fenêtre temporelle, d'une durée prédéterminée par exemple de 15 minutes, précédant le moment actuel.

Suivant une caractéristique avantageuse, la phase de suivi peut en outre comprendre, avant l'étape de présentation de la nouvelle tracklet à l'opérateur, une étape de test comprenant les étapes suivantes :

- calcul d'au moins une deuxième distance entre la nouvelle tracklet et au moins une tracklet préalablement rejetée, et
- rejet de ladite nouvelle tracklet comme n'appartenant pas à l'objet cible lorsque :

  ▪ la plus petite première distance est supérieure à la plus petite deuxième, et
  ▪ la plus petite deuxième distance est inférieure à un seuil, dit seuil de similarité, prédéterminé ;

Ainsi, le procédé selon l'invention permet de rejeter automatiquement une nouvelle tracklet, comme n'appartenant pas à l'objet cible, lorsque ladite nouvelle tracklet présente une ressemblance importante avec au moins une tracklet précédemment rejetée. Ainsi, cette nouvelle tracklet n'est pas présentée à l'opérateur ce qui permet de diminuer la sollicitions de l'opérateur.

Une nouvelle tracklet ainsi rejetée peut être mémorisée dans la liste des tracklets rejetées.

Le seuil de similarité peut être de valeur fixe. Le seuil de similarité peut être fixé au démarrage du procédé selon l'invention.

Il peut arriver que l'opérateur rejette trop de tracklets. Cela peut être un signe que la valeur du seuil humain SH est trop élevée et qu'il y a trop de faux positifs qui sont présentés à l'opérateur. Dans ce cas, le procédé selon l'invention peut comprendre une étape de réajustement, et en particulier de diminution, de la valeur du seuil humain, d'un pas de réajustement prédéterminé.

Le pas de réajustement peut être le même que le, ou différent du, pas d'apprentissage décrit plus haut.

Le pas de réajustement peut être d'une valeur fixe, ou d'une valeur variable, par exemple en fonction d'un nombre de tracklets rejetées par l'opérateur.

L'étape de réajustement de la valeur de seuil humain SH peut par exemple être déclenchée lorsque le nombre de tracklets rejetées sur une fenêtre temporelle prédéterminée, en particulier glissante, atteint une valeur seuil prédéterminée.

Selon un autre aspect de l'invention, il est proposé un programme d'ordinateur comprenant des instructions exécutables qui, lorsqu'elles sont exécutées par un appareil informatique, mettent en en œuvre toutes les étapes du procédé, selon l'invention, de suivi en temps réel et multi-caméras d'un objet cible.

Le programme d'ordinateur peut être en tout langage informatique, tel que par exemple en langage machine, en C, C++, JAVA, Python, etc.

Selon un autre aspect de l'invention, il est proposé un dispositif de suivi en temps réel et multi-caméras d'un objet cible comprenant des moyens configurés pour mettre en œuvre toutes les étapes du procédé, selon l'invention, de suivi en temps réel et multi-caméras d'un objet cible.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple par le programme d'ordinateur selon l'invention.

Selon un autre aspect de l'invention, il est proposé un système de suivi en temps réel et multi-caméras d'un objet cible, comprenant :

- plusieurs caméras, et
- un dispositif selon l'invention de suivi en temps réel et multi-caméras d'un objet cible à partir d'images fournies par lesdites caméras.

Au moins une des caméras peut être locale ou distante du dispositif. Dans ce dernier cas, la caméra peut être en communication avec le dispositif au travers d'un réseau de communication filaire ou sans fil, tel que par exemple le réseau Internet.

Les caméras peuvent être distribuées dans l'espace par exemple au sein d'un lieu, tel qu'une gare ou un aéroport, ou dans une ville, ou encore le long d'une voie de circulation.

## Description des figures et modes de réalisation

D'autres avantages et caractéristiques apparaîtront à l'examen de la description détaillée de modes de réalisation nullement limitatifs, et des dessins annexés sur lesquels :

- la FIGURE 1 est une représentation schématique d'un premier exemple de réalisation non limitatif d'un procédé selon l'invention ;
- la FIGURE 2 est une représentation schématique d'un deuxième exemple de réalisation non limitatif d'un procédé selon l'invention ;
- la FIGURE 3 est une représentation schématique d'un troisième exemple de réalisation non limitatif d'un procédé selon l'invention ;
- la FIGURE 4 est une représentation schématique d'un exemple de réalisation non limitatif d'un dispositif selon l'invention ; et
- la FIGURE 5 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

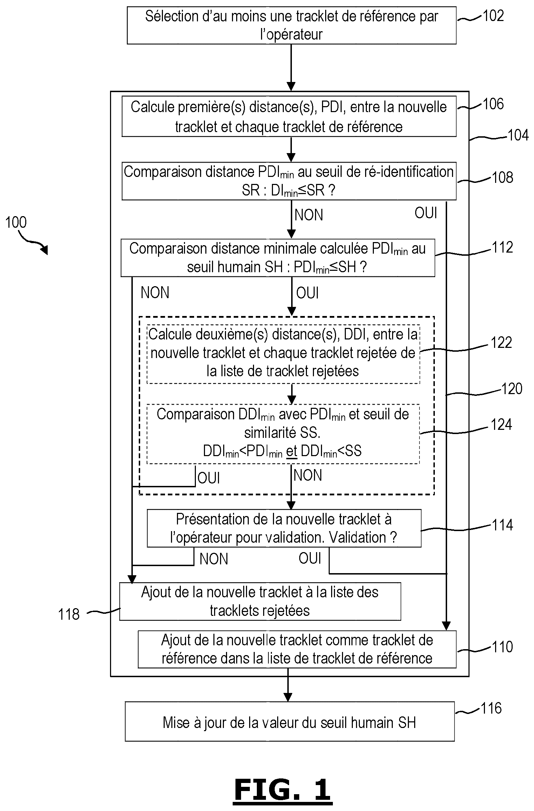

La FIGURE 1 est une représentation schématique d'un premier exemple de réalisation non limitatif d'un procédé selon la présente invention.

Le procédé 100 de la FIGURE 1 peut être utilisé pour le suivi de tout type d'objets cibles tels que des humains, des animaux, des voitures, etc. à partir d'images provenant de plusieurs caméras distribuées dans l'espace.

Dans la suite, et sans perte de généralité, on estime que le procédé est utilisé pour le suivi d'une personne cible.

Le procédé 100 comprend une étape 102 de sélection, par un opérateur, d'au moins une tracklet de référence correspondant à la personne cible à suivre. Préférentiellement, mais de manière nullement limitative, chaque tracklet de référence est obtenue à partir d'images provenant d'une des caméras captées préalablement au suivi. Chaque tracklet de référence est mémorisée dans une liste de tracklets de référence, également appelée liste de référence.

Le procédé 100 comprend ensuite une phase 104 de suivi de la personne cible à partir d'images provenant des caméras.

Lors de la phase de suivi 104, chaque nouvelle tracklet, provenant de chaque caméra, et correspondant à une personne, est analysée pour déterminer si ladite nouvelle tracklet correspond ou non à la personne cible. Pour ce faire, la phase de suivi 104 comprend une étape 106 lors de laquelle une distance, cosinus ou euclidienne, dite première distance, entre chaque tracklet de référence et la nouvelle tracklet est déterminée. Ainsi, lors de l'étape 106, pour la nouvelle tracklet, il est déterminé autant de premières distances qu'il y a de tracklets de référence dans la liste de référence. Parmi ces premières distances, seule est conservée la plus petite première distance, notée $PDI_{min}$. Alternativement, il est possible de conserver la moyenne des premières distances calculées.

Lors d'une étape 108, la plus petite première distance calculée $PDI_{min}$ 108 est comparée à un seuil de ré-identification, SR, prédéterminé. Par exemple SR=0.1.

Si $PDI_{min} \leq SR$, alors la nouvelle tracklet est automatiquement attribuée à la personne cible. Lors d'une étape 110 la nouvelle tracklet est ajoutée dans la liste de référence comme tracklet de référence.

Si $PDI_{min} > SR$, alors, lors d'une étape 112, la distance $PDI_{min}$ est comparée à un seuil humain, SH, prédéterminé, avec SH>SR. Par exemple SH=0.4. Si $PDI_{min} > SH$, alors la nouvelle tracklet est rejetée comme n'appartenant pas à l'objet cible.

Par contre, si à l'étape 112, $PDI_{min} \leq SH$, alors la nouvelle tracklet peut être présentée à l'opérateur pour validation, lors d'une étape 114. Si l'opérateur ne valide pas la nouvelle tracklet comme appartenant à la personne cible alors la nouvelle tracklet est rejetée comme n'appartenant pas à l'objet cible. Si, lors de l'étape 114, l'opérateur valide la nouvelle tracklet comme appartenant à la personne cible alors la nouvelle tracklet est ajoutée dans la liste de référence comme tracklet de référence, lors de l'étape 110.

Lors de l'étape 114, la nouvelle tracklet peut être présentée à l'opérateur individuellement. Alternativement, la nouvelle tracklet peut être mémorisée dans une liste de tracklets à présenter à l'opérateur, appelée liste de validation. Les nouvelles tracklets se trouvant dans la liste de validation peuvent être présentées à l'opérateur en fonction d'au moins un des paramètres suivants :

- nombre de tracklets, noté NTP, à présenter à l'opérateur en une fois,
- durée écoulée, DUR, depuis la dernière itération de l'étape de présentation, et/ou
- nombre, NMT, de meilleures correspondances.

Par exemple, lorsque NTP=15 et NMT=3, alors la phase de suivi 104 est réalisée sans l'étape de présentation 114 jusqu'à ce qu'il y ait au moins 15 tracklets dans la liste de validation. Dès que la liste de validation comprend 15 tracklets, l'étape 114 de présentation est réalisée. Lors de cette étape de présentation, seules sont présentées à l'opérateur les trois tracklets qui ont les meilleurs scores, c'est-à-dire les plus faibles distances par rapport aux tracklets de référence. Les autres tracklets sont ignorées.

Avantageusement, le procédé 100 comprend en outre une étape 116 de mise à jour de la valeur du seuil humain à chaque fois qu'une tracklet de référence est ajoutée dans la liste de référence. Suivant un exemple de réalisation, et sans perte de généralité, la valeur du seuil humain SH peut être mise à jour selon la relation suivante :

$$SH = SH_i - \left\{ NBTR \cdot \left( \frac{SH_i - SR}{NB_{max}} \right) \right\}$$

- SH la valeur du seuil humain ;
- $SH_i$ la valeur initiale du seuil humain choisie lors du démarrage du procédé 100 ;

- NBTR le nombre de tracklets de référence dans la liste de référence ;
- $NB_{max}$ le nombre maximum de tracklets de référence dans la liste de référence ; et
- PA un pas d'apprentissage prédéfini.

Le pas d'apprentissage PA peut être défini en fonction d'un nombre maximum, $NB_{MAX}$, de tracklets de référence dans la liste de référence.

Alternativement, ou en plus, le pas d'apprentissage PA peut être défini en fonction d'une valeur d'apprentissage totale, notée D. Par exemple :

$$D \leq (SH_i - SR).$$

Suivant un exemple de réalisation non limitatif, le pas d'apprentissage PA peut être calculé selon la relation suivante :

$$PA = D/NB_{MAX}$$

Suivant un exemple de réalisation non limitatif :

$$D = SH_i - SR.$$

En prenant, SR=0.1, $SH_i$=0.4, comme indiqué plus haut à titre d'exemple non limitatif, on a :

$$SH = 0.4 - \left\{ NBTR \cdot \left( \frac{0.3}{NB_{max}} \right) \right\}$$

En prenant comme exemple, $NB_{max}$=600 alors

$$SH = 0.4 - \left\{ NBTR \cdot \left( \frac{0.3}{600} \right) \right\}$$

Ainsi, plus le nombre de tracklets de référence augmente dans la liste de référence, plus la valeur du seuil humain SH augmente et s'approche de la valeur du seuil de ré-identification, de sorte que l'opérateur est de moins sollicité au fur et à mesure de la phase de suivi.

Lorsque la nouvelle tracklet est rejetée à l'étape 112 car $PDI_{min} > SH$, ou lorsque la nouvelle tracklet est rejetée à l'étape 114 car l'opérateur indique que la nouvelle tracklet n'appartient pas à l'objet cible, la phase de suivi peut optionnellement comprendre une étape 118 d'ajout de la nouvelle tracklet dans une liste de tracklet rejetées.

De plus, à l'étape 112, lorsque $PDI_{min} \leq SH$, la phase de suivi 104 peut comprendre une étape 120 de test, optionnelle, réalisée avant l'étape 114 de présentation. Cette étape de test 120 a pour objectif de déterminer si la nouvelle tracklet présente une similarité avec une tracklet précédemment rejetée.

L'étape de test 120 comprend une étape 122 calcul d'au moins une distance, euclidienne ou cosinus, dite deuxième distance, notée DDI, entre la nouvelle tracklet et chaque tracklet de la liste de tracklets rejetées. Ainsi, lors de l'étape 122, pour la nouvelle tracklet, il est déterminé autant de deuxièmes distances qu'il y a de tracklets rejetées dans la liste de tracklets rejetées. Parmi ces deuxièmes distances, seule est conservée la plus petite deuxième distance, notée $DDI_{min}$.

Lors d'une étape 124 :

- la plus petite deuxième distance $DDI_{min}$ est comparée à la plus petite première distance $PDI_{min}$, et
- la plus petite deuxième distance $DDI_{min}$ est comparée à un seuil, dit seuil de similarité, prédéterminé, noté SS ;

Lorsque, $DDI_{min} < PDI_{min}$ et que $DDI_{min} < SS$, alors on estime que la nouvelle tracklet est très similaire à une des tracklets déjà rejetées. Dans ce cas, la nouvelle tracklet est rejetée comme n'appartenant pas à l'objet cible. La nouvelle tracklet peut optionnellement être mémorisée lors de l'étape 118 dans la liste des tracklets rejetées. Dans le cas contraire, alors la phase de suivi 104 continue à l'étape 114, de manière similaire à ce qui a été décrit plus haut.

Le seuil de similarité SS peut être de valeur fixe. Le seuil de similarité peut être fixé au démarrage du procédé selon l'invention.

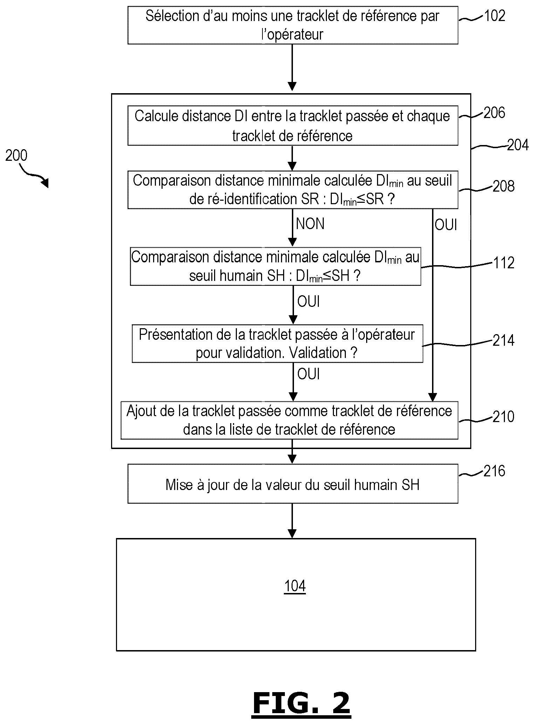

La FIGURE 2 est une représentation schématique d'un deuxième exemple de réalisation non limitatif d'un procédé selon la présente invention.

Le procédé 200 de la FIGURE 2 comprend l'étape 102 de sélection, par l'opérateur, d'au moins une tracklet de référence correspondant à la personne cible à suivre. Préférentiellement, chaque tracklet de référence est obtenue à partir d'images provenant d'une des caméras captées préalablement au suivi. Chaque tracklet de référence est mémorisée dans une liste de tracklets de référence, également appelée liste de référence.

Le procédé 200 comprend ensuite une phase 204 d'enrichissement de la liste de référence par ajout d'au moins une tracklet de référence additionnelle dans ladite liste de référence, choisie dans une base de tracklets passées acquises lors d'une période prédéterminée précédant la phase de suivi. Autrement dit, la phase d'enrichissement 204 est réalisée juste avant l'exécution de la phase de suivi 104. Les tracklets passées sont celles qui ont été acquises par les caméras pendant une période prédéterminée passée précédant immédiatement la phase de suivi 104. Par exemple, la période passée peut être de 30 minutes ou d'une heure.

La phase d'enrichissement 204 est réalisée à tour de rôle et individuellement pour chaque tracklet passée, correspondant à une personne, et qui a été acquise par l'une des caméras pendant la période prédéterminée passée précédant immédiatement la phase de suivi.

La phase d'enrichissement comprend une étape 206 calculant, pour la tracklet passée, une distance, cosinus ou euclidienne, notée DI, entre ladite tracklet passée et chaque tracklet de référence dans la liste de référence. Parmi les distances calculées, seule la plus petite $DI_{min}$ est conservée.

Lors d'une étape 208, la plus petite distance calculée $DI_{min}$ lors de l'étape 208 est comparée au seuil de ré-identification, SR, prédéterminé. Par exemple SR=0.1.

Si $DI_{min} \leq SR$, alors la tracklet passée est automatiquement attribuée à la personne cible. Lors d'une étape 210 la tracklet passée est ajoutée dans la liste des tracklets de référence comme tracklet de référence, et vient enrichir la liste de référence.

Si $DI_{min} > SR$, alors, lors d'une étape 212, la distance $DI_{min}$ est comparée à un seuil humain, SH, prédéterminé, avec SH>SR. Par exemple SH=0.4. Si $DI_{min} > SH$, alors la tracklet passée est rejetée.

Par contre, si $DI_{min} \leq SH$, alors la tracklet passée est présentée à l'opérateur pour validation, lors d'une étape 214. Si l'opérateur ne valide pas la tracklet passée comme appartenant à la personne cible alors la tracklet passée est rejetée et la phase d'enrichissement 204 peut être réalisée pour une autre tracklet passée, le cas échéant. Si l'opérateur valide la tracklet passée comme appartenant à la personne cible alors la tracklet passée est ajoutée comme tracklet de référence dans la liste de référence lors de l'étape 210.

La phase d'enrichissement 204 peut être réitérée pour chaque tracklet passée, tant qu'il reste des tracklets passées acquises lors de la période passée prédéterminée.

Ainsi, la phase d'enrichissement permet d'enrichir la liste de référence avec une ou plusieurs tracklets passées, à partir d'une ou plusieurs tracklets de référence sélectionnées par l'opérateur.

Le procédé 200 comprend, après la phase d'enrichissement 204, une étape 216 de mise à jour du seuil humain en fonction du nombre de tracklets de référence mémorisées dans la liste de référence.

La mise à jour de la valeur du seuil humain peut être réalisée suivant toute relation prédéterminée.

Suivant un exemple de réalisation particulier et sans perte de généralité, la valeur du seuil humain peut être mise à jour selon la relation suivant :

$$ SH = SH_i - \left\{ NBTR . \left( \frac{SH_i - SR}{NB_{max}} \right) \right\} $$

- SH la valeur du seuil humain ;
- $SH_i$ la valeur initiale du seuil humain ;
- NBTR le nombre de tracklets de référence dans la liste de référence ;
- $NB_{max}$ le nombre maximum de tracklets de référence dans la liste de référence ; et
- PA un pas d'apprentissage prédéfini.

L'étape 216 de mise à jour de la valeur du seuil humain SH peut être réalisée à chaque fois qu'une tracklet passée est ajoutée dans la liste de référence lors de la phase 204. L'étape 216 de mise à jour du seuil humain SH peut être réalisée une seule fois lorsque toutes les itérations de la phase d'enrichissement ont été réalisées et qu'il ne reste plus de tracklet passée à traiter. Suivant encore une autre alternative, l'étape 216 de mise à jour du seuil humain SH peut être réalisée à une autre fréquence, par exemple choisie par l'opérateur.

De manière optionnelle, la phase d'enrichissement 204 peut comprendre une étape de mémorisation de la tracklet passée dans une liste de tracklets passées rejetées lorsqu'elle est rejetée.

De plus, de manière optionnelle, la phase d'enrichissement 204 peut en outre comprendre une étape de test, similaire à l'étape de test 120, réalisée avec les tracklets passées préalablement rejetées et mémorisées dans la liste de tracklets passées préalablement rejetées.

Le procédé 200 peut en outre comprendre une phase de suivi 104, telle que décrite plus haut en référence à la FIGURE 1.

Il est à remarqué que, à la différence du procédé 100 de la FIGURE 1, le procédé 200 de la FIGURE 2 ne comprend pas l'étape 116 de mise à jour de la valeur du seuil humain SH lors du suivi.

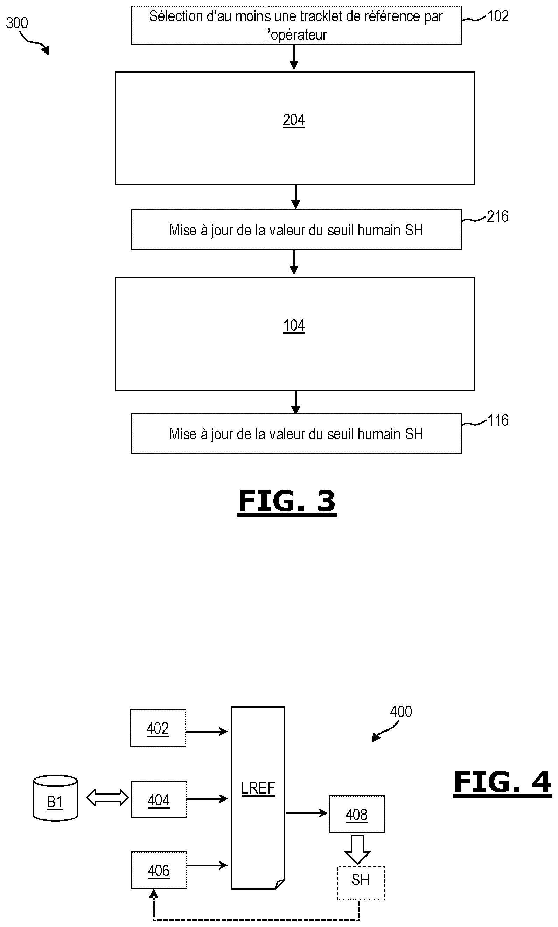

La FIGURE 3 est une représentation schématique d'un troisième exemple de réalisation non limitatif d'un procédé selon la présente invention.

Le procédé 300 de la FIGURE 3 comprend à une combinaison des procédés 100 et 200 des FIGURES 1 et 2. Le procédé 300 comprend l'étape 102, la phase d'enrichissement 204, l'étape 216 de mise à jour de la valeur du seuil humain SH avant le commencement du suivi, la phase de suivi 104 ainsi que l'étape 116 de mise à jour de la valeur du seuil humain SH pendant le suivi.

La FIGURE 4 est une représentation schématique d'un exemple de réalisation non limitatif d'un dispositif selon la présente invention.

Le dispositif 400 de la FIGURE 4 peut être utilisé pour mettre en œuvre un procédé de suivi d'un objet cible selon l'invention, et en particulier l'un quelconque des procédés 100, 200 ou 300 décrits plus haut.

Le dispositif 400 comprend au moins un module 402 de sélection d'au moins une tracklet de référence par l'opérateur. Un tel module permet à l'opérateur d'ajouter une ou plusieurs tracklets de référence dans une liste de référence LREF au début du procédé. En particulier, le module 402 est configuré pour la mise en œuvre de l'étape 102 décrite plus haut.

Le dispositif 400 comprend au moins un module 404 d'enrichissement de la liste de référence LREF à partir de tracklets passées mémorisées dans une base de données B1 de tracklets passées. En particulier, le module 404 est configuré pour mettre en œuvre la phase d'enrichissement 204 des FIGURES 2 ou 3.

Le dispositif 400 comprend au moins un module 406 de suivi permettant de réaliser un suivi d'un objet cible et, éventuellement d'enrichir la liste de référence LREF à chaque fois qu'une nouvelle tracklet, correspondant à l'objet cible, est identifiée. En particulier, le module 406 est configuré pour mettre en œuvre la phase de suivi 104 des FIGURES 1, 2 ou 3.

Le dispositif 400 comprend au moins un module 408 de mise à jour de la valeur du seuil humain en fonction du nombre de tracklets de référence dans la liste de référence et d'une relation prédéterminée préalablement renseignée. En particulier, le module 408 est configuré pour mettre en œuvre au moins une, et en particulier chacune, des étapes de mise à jour 116 et 216 des FIGURES 1, 2 ou 3.

Au moins un des modules 402-408 peut être un module indépendant des autres modules 402-408. Au moins deux des modules 402-408 peuvent être intégrés au sein d'un même module

Chaque module 402-408 peut être un module matériel (hardware) ou un module logiciel (software), tel qu'une application ou un programme d'ordinateur, exécuté par un composant électronique de type processeur, puce électronique, calculateur, etc.

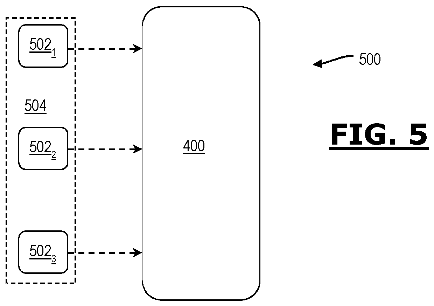

La FIGURE 5 est une représentation schématique d'un exemple de réalisation non limitatif d'un système de suivi selon l'invention.

Le système 500 peut être utilisé pour mettre en œuvre un procédé de suivi selon l'invention, et en particulier l'un quelconque des procédés 100, 200 ou 300 des FIGURES 1, 2 ou 3.

Le système 500 est utilisé pour le suivi d'un objet cible de tout type, et en particulier d'une personne cible, à partir de flux vidéo provenant de K caméras $502_1$-$502_K$ dudit système, distribuées dans l'espace et formant un réseau 504 de caméras, avec $K \geq 1$. Dans l'exemple représenté, et de manière nullement limitative K=3.

Le système 500 comprend en outre un dispositif de suivi selon l'invention, tel que par exemple le dispositif 400 de la FIGURE 4.

Le dispositif 400 peut être local aux caméras $502_1$-$502_3$ ou distant des caméras $402_1$-$402_3$.

Le dispositif 400 peut être relié à chacune des caméras $502_1$-$502_3$ par une connexion filaire ou sans fil.

Bien entendu l'invention n'est pas limitée aux exemples qui viennent d'être décrits. Par exemple, le nombre des caméras n'est pas limité à 3. De plus, les valeurs de seuil et le nombre de tracklets de référence ainsi que les différentes relations évoquées pour le calcul du seuil humain sont donnés à d'exemple non limitatif.

**Revendications**

1. Procédé (100;200;300) mis en œuvre par ordinateur de suivi en temps réel et multi-caméras d'un objet cible, à partir d'une liste (LREF), dite de référence, comprenant au moins une tracklet, dite de référence, appartenant audit objet cible , ledit procédé (100;200;300) comprenant une phase (104) de suivi réalisée pour au moins une nouvelle tracklet captée par au moins une des caméras ($502_1$-$502_3$), ladite phase de suivi comprenant les étapes suivantes :

- calcul (106) d'au moins une première distance entre ladite nouvelle tracklet et au moins une tracklet de référence ;
- lorsque la plus petite première distance calculée est comprise entre un premier seuil prédéterminé (SR), dit seuil de ré-identification, et un deuxième seuil prédéterminé (SH), dit seuil humain, supérieur audit seuil de ré-identification, présentation (114) de ladite nouvelle tracklet à un opérateur pour attribution ou non de ladite nouvelle tracklet audit objet cible, manuellement, par ledit opérateur ;

**caractérisé en ce que** le seuil humain (SH) est fonction du nombre de tracklets de référence dans ladite liste de référence (LREF), et **en ce que** la valeur du seuil humain est ajustée de manière inversement proportionnelle au nombre de tracklets de référence dans la liste de référence.

2. Procédé (100;200;300) selon la revendication précédente, **caractérisé en ce que**, lorsque la plus petite première distance calculée est inférieure au seuil de ré-identification (SR), la phase de suivi (104) comprend une attribution automatique de la nouvelle tracklet à l'objet cible.

3. Procédé (100;200;300) selon l'une quelconque des revendications précédentes, **caractérisé en ce que**, lorsqu'une nouvelle tracklet est attribuée à l'objet cible lors de la phase de suivi, ladite phase de suivi (104) comprend en outre une étape (110) d'ajout de ladite nouvelle tracklet comme tracklet de référence dans ladite liste de référence (LREF).

4. Procédé (200;300) selon la revendication précédente, **caractérisé en ce qu'**il comprend, avant la phase de suivi (104), une phase (204) préalable d'enrichissement de la liste de référence (LREF), par ajout d'au moins une tracklet de référence additionnelle dans ladite liste de référence, choisie dans une base (B1) de tracklets passées acquises lors d'une période prédéterminée précédant le déclenchement de la phase de suivi (104).

5. Procédé (200;300) selon la revendication précédente, **caractérisé en ce que** la phase (204) préalable d'enrichissement de la liste de référence (LRFE) comprend au moins une itération des étapes suivantes réalisées pour une tracklet passée :

- calcul (206) d'au moins une distance entre :

  ▪ une tracklet de référence de ladite liste de référence, et
  ▪ de ladite tracklet passée,

- ajout (210), ou non, de ladite tracklet passée comme tracklet de référence additionnelle dans ladite liste de référence (LREF) en fonction :

  ▪ de ladite au moins une distance calculée, et
  ▪ du seuil de ré-identification (SR) et/ou du seuil humain (SH).

6. Procédé (100;200;300) selon l'une quelconque des revendications 3 à 5, **caractérisé en ce qu'**il comprend une mise à jour (116;216) de la valeur du seuil humain (SH) en cas d'ajout d'une tracklet de référence dans ladite liste de référence (LREF).

7. Procédé (100;200;300) selon l'une quelconque des revendications précédentes, **caractérisé en ce qu'**il comprend, un ajustement du seuil humain (SH), et/ou du seuil de ré-identification (SR), en fonction d'au moins une caractéristique d'une scène observée par une caméra ($502_1$-$502_3$), ladite caractéristique étant la luminosité de la scène ou la complexité de la scène.

8. Procédé (100;200;300) selon l'une quelconque des revendications précédentes, **caractérisé en ce que** l'étape (114) de présentation d'une tracklet à l'opérateur est réalisée suivant au moins une règle prédéterminée en fonction d'au moins une des paramètres suivants :

- nombre de tracklets à présenter à l'opérateur en une fois,
- durée écoulée depuis la dernière itération de l'étape de présentation, et/ou
- nombre de meilleures correspondances.

9. Procédé (100;200;300) selon l'une quelconque des revendications précédentes, **caractérisé en ce que** la même décision de l'opérateur concernant une première tracklet, validation ou rejet de la première tracklet, est appliquée à une deuxième tracklet suivant ladite première tracklet, validation ou rejet de la deuxième tracklet.

10. Procédé (100;200;300) selon l'une quelconque des revendications précédentes, **caractérisé en ce qu'**il comprend une étape (118) de mémorisation de la nouvelle tracklet dans une liste, dite liste de tracklets rejetées, lorsque ladite nouvelle tracklet n'est pas attribuée à l'objet cible.

11. Procédé (100;200;300) selon l'une quelconque des revendications précédentes, **caractérisé en ce que** la phase de suivi (104) comprend en outre, avant l'étape (114) de présentation de la nouvelle tracklet à l'opérateur, une étape (120) de test comprenant les étapes suivantes :

- calcul (122) d'au moins une deuxième distance entre la nouvelle tracklet et au moins une tracklet préalablement rejetée, et
- rejet de ladite nouvelle tracklet comme n'appartenant pas à l'objet cible lorsque :

  ▪ la plus petite première distance est supérieure à la plus petite deuxième, et
  ▪ la plus petite deuxième distance est inférieure à un seuil, dit seuil de similarité (SS), prédéterminé ;

12. Programme d'ordinateur comprenant des instructions exécutables qui, lorsqu'elles sont exécutées par un appareil informatique, mettent en en œuvre toutes les étapes du procédé (100;200;300) de suivi en temps réel et multi-caméras d'un objet cible selon l'une quelconque des revendications précédentes.

13. Dispositif (400) de suivi en temps réel et multi-caméras d'un objet cible comprenant des moyens configurés pour mettre en œuvre toutes les étapes du procédé (100;200;300) de suivi en temps réel et multi-caméras d'un objet cible selon l'une quelconque des revendications 1 à 11.

14. Système (500) de suivi en temps réel et multi-caméras d'un objet cible, comprenant :

- plusieurs caméras ($502_1$-$502_3$), et
- un dispositif (400) selon la revendication précédente de suivi en temps réel et multi-caméras d'un objet à partir d'images fournies par lesdites caméras.

**Patentansprüche**

1. Verfahren (100;200;300), implementiert durch einen Computer, für eine Echtzeit-Mehrkamera-Verfolgung eines Zielobjekts aus einer Liste (LREF), der sogenannten Referenzliste, umfassend mindestens ein Tracklet, das sogenannte Referenztracklet, das zu dem Zielobjekt gehört, wobei das Verfahren (100;200;300) eine Verfolgungsphase (104) umfasst, die für mindestens ein neues Tracklet umgesetzt wird, das durch mindestens eine der Kameras ($502_1$-$502_3$) aufgenommen wird, wobei die Verfolgungsphase die folgende Schritte umfasst:

- Berechnen (106) mindestens eines ersten Abstands zwischen dem neuen Tracklet und mindestens einem Referenztracklet;

- wenn der berechnete kleinste erste Abstand, der zwischen einer ersten vorbestimmten Schwelle (SR), genannt Schwelle für eine erneute Identifizierung, und einer zweiten vorbestimmten Schwelle (SH), genannt menschliche Schwelle, liegt, größer als die Schwelle für eine erneute Identifizierung ist, Darstellen (114) des neuen Tracklets für einen Bediener für eine manuelle Zuweisung oder keine des neuen Tracklets an das Zielobjekt durch den Bediener;

**dadurch gekennzeichnet, dass** die menschliche Schwelle (SH) abhängig von der Anzahl von Referenztracklets in der sogenannten Referenzliste (LREF) ist, und dadurch, dass der Wert der menschlichen Schwelle umgekehrt proportional zu der Anzahl von Referenztracklets in der Referenzliste angepasst wird.

2. Verfahren (100;200;300) nach dem vorstehenden Anspruch, **dadurch gekennzeichnet, dass** wenn der berechnete, kleinste erste Abstand geringer als die Schwelle für eine erneute Identifizierung (SR) ist, die Verfolgungsphase (104) eine automatische Zuweisung des neuen Tracklets zu dem Zielobjekt umfasst.

3. Verfahren (100;200;300) nach einem der vorstehenden Ansprüche, **dadurch gekennzeichnet, dass** wenn ein neues Tracklet dem Zielobjekt während der Verfolgungsphase zugewiesen wird, die Verfolgungsphase (104) ferner einen Schritt (110) der Anfügung des neuen Tracklets als Referenztracklet in der Referenzliste (LREF) umfasst.

4. Verfahren (200;300) nach dem vorstehenden Anspruch, **dadurch gekennzeichnet, dass** es vor der Verfolgungsphase (104) eine vorangehende Phase (204) der Vervollständigung der Referenzliste (LREF) durch Anfügung von mindestens einem zusätzlichen Referenztracklet in der Referenzliste, ausgewählt aus einer Basis (B1) von früheren Tracklets, die während eines vorbestimmten Zeitraums, der dem Auslösen der Verfolgungsphase (104) vorausgeht, erfasst wurden, umfasst.

5. Verfahren (200;300) nach dem vorstehenden Anspruch, **dadurch gekennzeichnet, dass** die vorangehende Phase (204) der Vervollständigung der Referenzliste (LRFE) mindestens eine Iteration der folgenden Schritte, die für ein früheres Tracklet umgesetzt wurden, umfasst:

- Berechnen (206) von mindestens einem Abstand zwischen:

  ▪ einem Referenztracklet der Referenzliste, und

■ dem früheren Tracklet,

- Anfügen (210), oder nicht, des früheren Tracklets als zusätzliches Referenztracklet in der Referenzliste (LREF) abhängig von:

■ dem mindestens einen berechneten Abstand und
■ der Schwelle für eine erneute Identifizierung (SR) und/oder der menschlichen Schwelle (SH).

6. Verfahren (100;200;300) nach einem der Ansprüche 3 bis 5, **dadurch gekennzeichnet, dass** es eine Aktualisierung (116;216) des Werts der menschlichen Schwelle (SH) im Falle der Anfügung eines Referenztracklets zu der Referenzliste (LREF) umfasst.

7. Verfahren (100;200;300) nach einem der vorstehenden Ansprüche, **dadurch gekennzeichnet, dass** es eine Anpassung der menschlichen Schwelle (SH) und/oder der Schwelle für eine erneute Identifizierung (SR) in Abhängigkeit von mindestens einem Merkmal einer durch eine Kamera ($502_1$-$502_3$) beobachteten Szene umfasst, wobei das Merkmal die Helligkeit der Szene oder die Komplexität der Szene ist.

8. Verfahren (100;200;300) nach einem der vorstehenden Ansprüche, **dadurch gekennzeichnet, dass** der Schritt (114) der Darstellung eines Tracklets für den Bediener gemäß mindestens einer vorbestimmten Regel umgesetzt wird, in Abhängigkeit von mindestens einem der folgenden Parameter:

- Anzahl der Tracklets, die für den Bediener gleichzeitig dargestellt werden sollen,
- verstrichene Zeit seit der letzten Iteration des Schritts der Darstellung und/oder
- Anzahl der besten Übereinstimmungen.

9. Verfahren (100;200;300) nach einem der vorstehenden Ansprüche, **dadurch gekennzeichnet, dass** die gleiche Entscheidung des Bedieners hinsichtlich eines ersten Tracklets, Validierung oder Ablehnung des ersten Tracklets, auf ein zweites Tracklet, das dem ersten Tracklet nachfolgt, Validierung oder Ablehnung des zweiten Tracklets, angewendet wird.

10. Verfahren (100;200;300) nach einem der vorstehenden Ansprüche, **dadurch gekennzeichnet, dass** es einen Schritt (118) des Speicherns des neuen Tracklets in einer Liste, genannte Liste der abgelehnten Tracklets, wenn das neue Tracklet dem Zielobjekt nicht zugewiesen wird, umfasst.

11. Verfahren (100;200;300) nach einem der vorstehenden Ansprüche, **dadurch gekennzeichnet, dass** die Verfolgungsphase (104) ferner vor dem Schritt (114) der Darstellung des neuen Tracklets für den Bediener einen Testschritt (120) umfasst, umfassend die folgenden Schritte:

- Berechnen (122) von mindestens einem zweiten Abstand zwischen dem neuen Tracklet und mindestens einem vorangehenden, abgelehnten Tracklet und
- Ablehnen des neuen Tracklets als nicht zu dem Zielobjekt gehörend, wenn:

■ der kleinste erste Abstand größer als der kleinste zweite ist, und
■ der kleinste zweite Abstand geringer als eine vorbestimmte Schwelle, genannt Ähnlichkeitsschwelle (SS) ist;

12. Computerprogramm, umfassend ausführbare Anweisungen, die, wenn sie durch eine Rechnereinrichtung ausgeführt werden, alle Schritte des Verfahrens (100;200;300) für eine Echtzeit-Mehrkamera-Verfolgung eines Zielobjekts nach einem der vorstehenden Ansprüche implementieren.

13. Vorrichtung (400) für eine Echtzeit- und Mehrkamera-Verfolgung eines Zielobjekts, umfassend Mittel, die zum Implementieren aller Schritte des Verfahrens (100;200;300) für eine Echtzeit- und Mehrkamera-Verfolgung eines Zielobjekts nach einem der Ansprüche 1 bis 11 konfiguriert sind.

14. System (500) für eine Echtzeit-Mehrkamera-Verfolgung eines Zielobjekts, umfassend:

- mehrere Kameras ($502_1$-$502_3$) und
- eine Vorrichtung (400) nach dem vorstehenden Anspruch für eine Echtzeit- und Mehrkamera-Verfolgung eines Objekts anhand von Bildern, die durch die Kameras geliefert werden.

## Claims

1. A computer implemented method (100;200;300) for real-time multi-camera tracking of a target object, from a list (LREF), called reference list, comprising at least one tracklet, called reference tracklet, belonging to said target object, said method (100;200;300) comprising a tracking phase (104) carried out for at least one new tracklet captured by at least one of the cameras ($502_1$-$502_3$), said tracking phase comprising the following steps:

- calculating (106) at least a first distance between said new tracklet and at least one reference tracklet;

- when the smallest calculated first distance is between a first predetermined threshold (SR), called re-identification threshold, and a second predetermined threshold (SH), called human threshold, greater than said re-identification threshold, presenting (114) said new tracklet to an operator, for said operator to assign or not assign said new tracklet to said target object, manually;

characterized in that the human threshold (SH) is a function of the number of reference tracklets in said reference list (LREF), and

in that the human threshold value is adjusted in a manner inversely proportional to the number of reference tracklets in the reference list.

2. The method (100;200;300) according to the preceding claim, **characterized in that**, when the smallest calculated first distance is less than the re-identification threshold (SR), the tracking phase (104) comprises an automatic assignment of the new tracklet to the target object.

3. The method (100;200;300) according to any one of the preceding claims, **characterized in that**, when a new tracklet is assigned to the target object during the tracking phase, said tracking phase (104) further comprises a step (110) of adding said new tracklet as a reference tracklet in said reference list (LREF).

4. The method (200;300) according to the preceding claim, **characterized in that** it comprises, before the tracking phase (104), a prior phase (204) of enriching the reference list (LREF), by adding at least one additional reference tracklet in said reference list, chosen from a database (B1) of past tracklets acquired during a predetermined period preceding the triggering of the tracking phase (104).

5. The method (200;300) according to the preceding claim, **characterized in that** the prior phase (204) of enriching the reference list (LRFE) comprises at least one iteration of the following steps carried out for a past tracklet:

   - calculating (206) at least one distance between:

     ◦ a reference tracklet of said reference list, and
     ◦ said past tracklet,

   - adding (210), or not, said past tracklet as an additional reference tracklet in said reference list (LREF) as a function of:

     ◦ said at least one calculated distance, and
     ◦ the re-identification threshold (SR) and/or the human threshold (SH).

6. The method (100;200;300) according to any one of claims 3 to 5, **characterized in that** it comprises an update (116;216) of the value of the human threshold (SH) in the event a reference tracklet is added to said reference list (LREF).

7. The method (100;200;300) according to any one of the preceding claims, **characterized in that** it comprises an adjustment of the human threshold (SH), and/or of the re-identification threshold (SR), as a function of at least one characteristic of a scene observed by a camera ($502_1$-$502_3$), said characteristic being the brightness of the scene or the complexity of the scene.

8. The method (100;200;300) according to any one of the preceding claims, **characterized in that** the step (114) of presenting a tracklet to the operator is carried out according to at least one predetermined rule as a function of at least one of the following parameters:

   - number of tracklets to be presented to the operator at one time,
   - elapsed time since the last iteration of the presentation step, and/or
   - number of best matches.

9. The method (100;200;300) according to any one of the preceding claims, **characterized in that** the same decision by the operator for a first tracklet, validation or rejection of the first tracklet, is applied to a second tracklet following said first tracklet, validation or rejection of the second tracklet.

10. The method (100;200;300) according to any one of the preceding claims, **characterized in that** it comprises a step (118) of storing the new tracklet in a list, called rejected tracklet list, when said new tracklet is not assigned to the target object.

11. The method (100; 200; 300) according to any one of the preceding claims, **characterized in that** the tracking phase (104) further comprises, prior to the step (114) of presenting the new tracklet to the operator, a test step (120) comprising the following steps:

    - calculating (122) at least one second distance between the new tracklet and at least one previously rejected tracklet, and
    - rejecting said new tracklet as not belonging to the target object when:

      ◦ the smallest first distance is greater than the smallest second distance, and

∘ the smallest second distance is less than a predetermined threshold, referred to as the similarity threshold (SS);

12. A computer program comprising executable instructions which, when executed by a computing apparatus, implement all the steps of the method (100;200;300) for real-time multi-camera tracking of a target object according to any one of the preceding claims.

13. A device (400) for real-time multi-camera tracking of a target object comprising means configured to implement all the steps of the method (100;200;300) for real-time multi-camera tracking of a target object according to any one of claims 1 to 11.

14. A system (500) for real-time multi-camera tracking of a target object, comprising:

- a plurality of cameras ($502_1$-$502_3$), and
- a device (400) according to the preceding claim for real-time multi-camera tracking of a target object from images provided by said cameras.

100

Sélection d'au moins une tracklet de référence par l'opérateur ⌐102

Calcule première(s) distance(s), PDI, entre la nouvelle tracklet et chaque tracklet de référence ⌐106

⌐104

Comparaison distance PDI$_{min}$ au seuil de ré-identification SR : DI$_{min}$≤SR ? ⌐108

NON          OUI

Comparaison distance minimale calculée PDI$_{min}$ au seuil humain SH : PDI$_{min}$≤SH ? ⌐112

NON          OUI

Calcule deuxième(s) distance(s), DDI, entre la nouvelle tracklet et chaque tracklet rejetée de la liste de tracklet rejetées ⌐122

⌐120

Comparaison DDI$_{min}$ avec PDI$_{min}$ et seuil de similarité SS.
DDI$_{min}$<PDI$_{min}$ et DDI$_{min}$<SS ⌐124

OUI          NON

Présentation de la nouvelle tracklet à l'opérateur pour validation. Validation ? ⌐114

NON          OUI

Ajout de la nouvelle tracklet à la liste des tracklets rejetées

118

Ajout de la nouvelle tracklet comme tracklet de référence dans la liste de tracklet de référence ⌐110

Mise à jour de la valeur du seuil humain SH ⌐116

## FIG. 1

Sélection d'au moins une tracklet de référence par l'opérateur —102

200

Calcule distance DI entre la tracklet passée et chaque tracklet de référence —206

—204

Comparaison distance minimale calculée $DI_{min}$ au seuil de ré-identification SR : $DI_{min} \leq SR$ ? —208

NON ⎮ OUI

Comparaison distance minimale calculée $DI_{min}$ au seuil humain SH : $DI_{min} \leq SH$ ? —112

OUI

Présentation de la tracklet passée à l'opérateur pour validation. Validation ? —214

OUI

Ajout de la tracklet passée comme tracklet de référence dans la liste de tracklet de référence —210

Mise à jour de la valeur du seuil humain SH —216

104

## FIG. 2

300

| Sélection d'au moins une tracklet de référence par l'opérateur | 102 |

| 204 |

| Mise à jour de la valeur du seuil humain SH | 216 |

| 104 |

| Mise à jour de la valeur du seuil humain SH | 116 |

## FIG. 3

400

| 402 |

B1

| 404 |

| 406 |

LREF

| 408 |

SH

## FIG. 4

502₁

504

502₂

400

502₃

500

**FIG. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2022004768 A1

- US 2021182532 A1